(19) Europäisches Patentamt

European Patent Office

Office européen des brevets

(11) **EP 1 701 555 A1**

(12) **EUROPEAN PATENT APPLICATION**

(43) Date of publication:
**13.09.2006 Bulletin 2006/37**

(51) Int Cl.:
*H04N 17/02* (2006.01)  *H04N 1/60* (2006.01)

(21) Application number: **05300165.7**

(22) Date of filing: **07.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Thomson Licensing**
**92100 Boulogne-Billancourt (FR)**

(72) Inventors:
• **Stauder, Jürgen**
**35440 Montreuil/Ille (FR)**

• **Colatoni, Philippe**
**42000 Saint Etienne (FR)**
• **Blonde, Laurent**
**35235 Thorigne-Fouillard (FR)**

(74) Representative: **Rossmanith, Manfred**
**Deutsche Thomson-Brandt GmbH**
**European Patent Operations**
**Karl-Wiechert-Allee 74**
**30625 Hannover (DE)**

(54) **Device and method for characterizing a colour device**

(57) An apparatus for characterizing colour devices is suggested. The apparatus comprises input means for inputting a set of input colour values fed into the colour device. Measurement means measure a first set of output colour values of the colour device, wherein the output colour values are responsive to the input colour values. Determination means determine a first transformation rule from the first set of input and output colour values for transforming input colour values into output colour values. Calculation means calculate additional input and output colour values based on the first transformation rule to generate a second set of input and output colour values. Means for determining a second transformation rule from the second set of input and output colour values in order to transform input colour values into output colour values.

Fig. 3

EP 1 701 555 A1

**Description**

Field of the invention

The invention relates to a device and a method for characterizing a color device.

In connection with the present invention colour device means any kind of image output device, e.g. a film projector, a digital projector, a CRT or LCD monitor, a Digital Video Disc (DVD) storage device with linked monitor or a video cassette storage device with linked monitor, or any kind of image capturing device, e.g. a film camera in combination with a film scanner, an electronic camera, or an intermediate device, for example a film printer (but without film projector), a colour correction device (but without display) or any other colour device working on colour images.

Background of the invention

Today in TV and film production digitally generated special effects are frequently used. Already since long in film production almost all processing steps -commonly summarized under the term "post production"- involve digital technologies such as colour management or colour keying to name only two examples. The importance of digital technologies is still growing driven by the emergence of digital scanners, digital cameras, new digital display devices like plasma and Liquid Crystal Display (LCD) screens and new digital media such as hard disk drives.

A person skilled in the art will know that there are many other devices utilized during post production of film material. In the following this type of devices is referred to as digital studio equipment in general.

Although the invention will be described in connection with digital colour devices it applies to any kind of colour output or colour capture device as long the image signal can be digitised at some point along the signal path. An important example of this type of colour device is a film scanner, which generates digital image signals from analogue light signals.

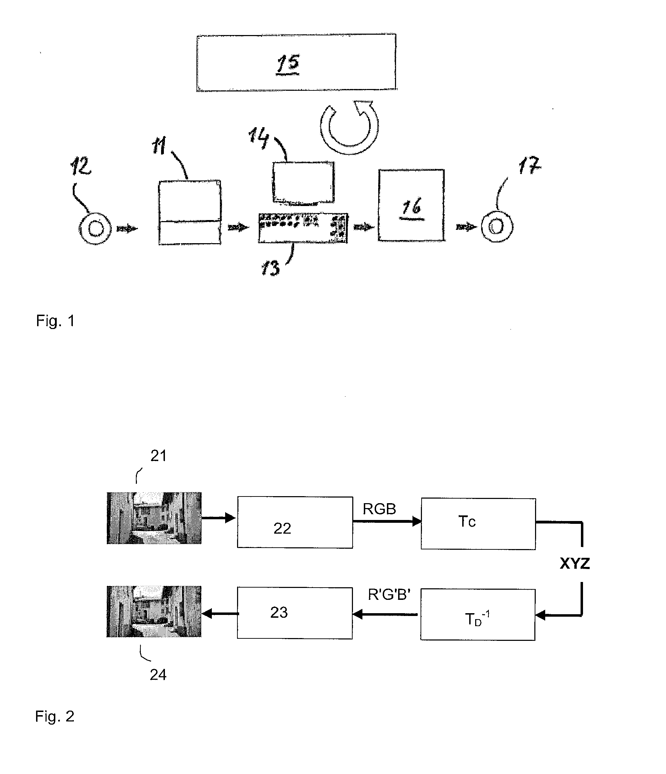

Fig. 1 schematically illustrates a typical situation during post production of a film by symbolizing the workflow in a post production studio. Since the processing work is based on the application of digital technologies Fig. 1 shows a "digital workflow".

Digital equipment influences cinematographic workflows in multiple ways. In the studio of Fig. 1 a telecine or scanner 11 converts a negative film 12 into electrical video signals which are processed by a colorist with a colour correction device 13. The colorist monitors his work by watching the result of his interventions on a screen 14 connected to the colour correction device 13. At the same time the image can be projected onto a large screen 15 of a cinema inside the post production studio. Only now when the result of the processed video data is satisfactory, the video data are sent to a negative film recorder 16 to make a corrected negative film 17.

In Fig. 1 the post production process is exemplified only by colour correction even though a real post production process involves many more processing steps e.g. the introduction of digital effects. However, all digital post production steps follow the principle that the effects and corrections are applied on electronic video signals. The results are simultaneously controlled by displaying the electronic video signals. Only after the termination of the post production process a chemical film is produced. Domains such as computer graphics, video compression, transmission, and colour science are concerned during this process as well. However, the present invention focuses on colour imaging aspects in the processing of cinematographic content.

Colour is an important artistic element in film creation. Digital equipment changes completely the habits during capture and post-processing. Digital technologies bring new features but represent also a danger for artistic experience and heritage. It is thus necessary to understand and describe the analogue cinematographic image chain to transfer known artistic effects from conventional cinematographic post processing into digital cinema post processing. This requires the management of colours both in analogue and digital devices.

Colour is an important topic when storing, copying and multiplying content using various formats. Since the introduction of digital cinema will take a long time because large investments have to be made, analogue and digital equipment will co-exist for a certain period. Cinematographic workflows include multiple transfers from film to digital representations and vice versa. In all these transformations of content, colour should be preserved.

Colours are among the most important aspects of a film. Therefore, mastering cinematographic colour correction opens high-quality and emotional content to different types of audiences while keeping artistic and emotional intent. However, the more complex and heterogeneous the imaging chain is, the more difficult is it to keep colour reproduction coherent. Imaging chains may include carrying processing workflows employing different types of equipment and media. The explicit consideration of different device types and media in order to ensure correct colour reproduction is called colour management.

Colour management needs to be applied to all the content chain: capture devices, post processing devices, copying devices and display devices have to be mastered to ensure colour coherence.

Colour is also important when cinematographic content is distributed via multiple channels such as analogue film projection, digital film projection, television, streaming, DVD, videocassette, and mobile devices.

One main element of colour management is the characterization of colour devices. Colour devices include capturing devices (for example cameras and scanners), reproduction devices (for example film recorders, monitors and projectors). Colour devices include also varying media such as paper for colour prints, film for film projection or digital media (for example DVD) for monitor display. In this sense, a colour device may include several physical devices such as a DVD recorder and a connected monitor. The problem of colour management is that the colour output or input values for capturing devices or reproduction devices, respectively, are device dependent. A device dependent colour space can be a Red Green Blue (RGB) colour space. This means that the same colour values may be related to different colours when used with two different devices, because the colour spaces associated with the respective devices are not identical.

In consequence, it is necessary to transform the colours of a specific image from one colour space to another one when the image moves along the post production workflow from one colour device to the next one. The transformation of colour values from one colour space to another one usually is not linear. In the following this will be explained in more detail for the example of video and film colour spaces.

A necessary prerequisite for colour value transformation is to quantify, i.e. to measure colour values. The physiological colour impression of an observer is mainly determined by the spectrum of the light entering into the observer's eye. The human eye has three types of receptors. Thus, it is possible under constrained viewing conditions to define a specific colour by a set of three values, which are called tristimuli XYZ. The tristimuli have already been defined in 1931 by the CIE (Commission Internationale de l'Eclairage).

The tristimuli for a specific colour are calculated from the spectrum $S(\lambda)$ of the colour by integration with weighting functions:

$$X = \int S(\lambda)x(\lambda)d\lambda \qquad (1)$$

$$Y = \int S(\lambda)y(\lambda)d\lambda \qquad (2)$$

$$Z = \int S(\lambda)z(\lambda)d\lambda \qquad (3)$$

Contrary to that the output colour space of a CRT display is determined by the emitted light of the red, green and blue phosphors. Other colours are generated by additive mixture of the three basic colours. Obviously this colour space is device dependent.

In film, colours are generated by partial absorption of white light in red, green and blue colour layers contained in the film. Due to the different principle of colour generation -absorption instead of emission- generation of intermediate colours is ruled by multiplicative colour mixing. Again, the resulting colour space is device dependent and it is different from the colour space of the CRT display described above.

In practice, the transformation of colour values from one device dependent colour space to another device dependent colour space includes an intermediate step. The intermediate step is to transform a device dependent colour space first into a device independent colour space. The intermediate step is a specific colour transformation called device model. A device model is established by colour device characterization.

Colour device characterization consists in the establishment of a colour transformation between device dependent colour values and device independent colour values. This transformation is usually calculated from measurements of device dependent and device independent colour values. For a reproduction device this procedure is as follows: A set of device dependent colour values are fed into the device and the reproduced colours are measured by an objective, optical measurement instrument giving a set of corresponding device independent colour values.

The problem of device characterization is twofold. First, a high number of measurements is necessary to establish a colour transform with acceptable precision. Second, to scope with a limited number of measurements, a complex, often non-linear, colour transform has to be chosen that requires a high amount of computational power to fit transformation parameters and to carry out colour transformation.

In the article of F. L Bookstein entitled "Principal Warps: Thin Plate Splines and the Decomposition of Deformations." published in June 1989 in the IEEE Transactions on Pattern Analysis and Machine Intelligence, Volume 11, the author proposes a quite complex method based on thin plate splines using a non-linear bending energy function.

Therefore, it is desirable to provide an apparatus allowing for characterization of colour devices, wherein the apparatus reduces the complexity of colour characterization.

The inventive apparatus for characterizing colour devices comprises

- input means for inputting a first set of input colour values into the colour device,
- measurement means for measuring a first set of output colour values of the colour device, wherein the output colour values are responsive to the input colour values,
- determination means for determining a first transformation rule from the first set of output colour values for transforming the input colour values into the output colour values,
- calculation means for calculating additional input and output colour values based on the first transformation rule to generate a second set of input colour values and a second set of output colour values,
- means for determining a second transformation rule from the second set of input and output colour values for transforming input colour values into output colour values.

In one specific embodiment the colour device is a reproduction device, wherein the input means are memory means for storing a set of device dependent input colour values and wherein the first set of output colour values are device independent colour values.

In another specific embodiment the colour device is a capturing device, wherein the input means provide device independent input colour values and wherein the first set of output colour values are device dependent.

In an advantageous embodiment of the inventive apparatus the determination means for the first transformation rule executes a thin plate spline interpolation scheme.

In a further embodiment of the invention the calculation means for the second transformation rule executes a nearest neighbour, a tetrahedral, a distance-weighted, a sequential linear or a natural neighbour interpolation method.

In yet another embodiment of the invention the input colour values are located in a first colour space and that the output colour values are located in a second colour space. In this case it is useful if the second set of input or output colour values lies on a regular grid either in the first or in the second colour space.

According to another aspect of the invention a method for characterizing a colour device is proposed.

The inventive method comprises the following steps:

- providing the colour device with a set of input colour values,
- measuring a first set of output colour values, wherein the output colour values are responsive to the input colour values,
- determining a first transformation rule from the first set of input and output colour values for transforming the input colour values into the output colour values,
- calculating additional input and output colour values based on the first transformation rule to generate a second set of output colour values,
- determining a second transformation rule from the second set of input and output colour values for transforming the set of input colour values into the second set of output colour values.

It is advantageous if the step of determining a first transformation rule includes executing a thin plate spline interpolation scheme or a method based on a parametric mathematical model.

In a useful modification of the inventive method the step of determining a second transformation involves a nearest neighbour, a tetrahedral, a distance-weighted, a sequential linear, a natural neighbour interpolation method.

Brief description of the drawings

In the drawing an exemplary embodiment of the invention is illustrated. It shows:

Fig. 1 a simplified and schematic diagram of a post production studio,
Fig. 2 a flow diagram of a calibrated image chain,
Fig. 3 a flow diagram for the colour characterization of a device,
Fig. 4 a set of tabulated RGB values,
Fig. 5 a set of XYZ values corresponding to the RGB values of Fig. 4,
Fig. 6 a set of over-sampled RGB values,
Fig. 7 a set of XYZ values corresponding to the RGB values of Fig. 6,
Fig. 8 a tetrahedral structure built from the over-sampled RGB values, and
Fig. 9 a tetrahedral structure built from the XYZ values corresponding to the RGB values of Fig. 8.

Detailed description of preferred embodiments

Fig. 2 shows an imaging chain calibrated such that reproduced colours are close or identical to captured colours. The calibration is carried out by a forward transform resulting from capture device characterization and an inverse transform resulting from reproduction device characterization.

Fig. 2 schematically shows a calibrated imaging chain. An image 21 is captured by a capture device 22 providing device dependent output colour values RGB. A transformation $T_c$ associated to the capture device 22 transforms the device dependent output colour values RGB into device independent colour values XYZ. An inverse transformation $T_D^{-1}$ associated with a reproduction device 23 transforms the device independent colour values XYZ into device dependent input colour values R'B'G' for the reproduction device 23. As a result the displayed image 24 is identical or almost identical with the captured image 21.

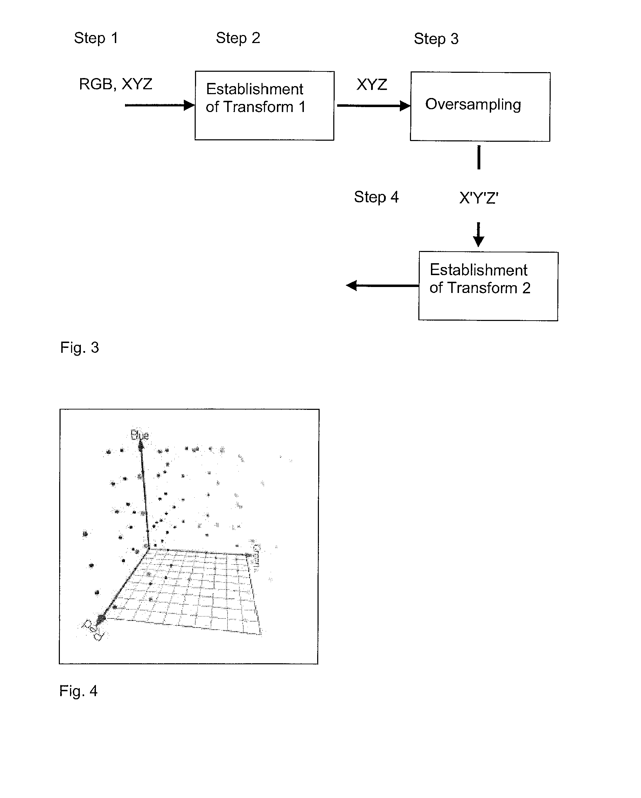

The invention proposes a device characterization method that solves both contradicting problems: Reducing the number of measurements as well as reducing the complexity of transform while keeping high precision. The method for colour device characterization is shown in Fig. 3.

The first step consists in the classical approach of measuring device dependent and corresponding device independent colour values for a colour device. For a reproduction device, a set of device dependent colour values is chosen and fed into the device. Then, the reproduced colours are measured giving a set of corresponding device independent colour values. For a capturing device, a set of colour patches is designed and measured giving a set of device independent colour values. Then, the colour patches are captured by the device and the corresponding device dependent output colour values are measured.

The second step consists in establishing a colour transform from the measurements. The advantage of combined step 1 and step 2 is that step 1 takes a reduced number of measurements while step 2 establishes a complex, possibly non-linear transform that provides good precision even with reduced number of measurements. The colour transform consists of a non-linear interpolation method comprising the following steps:

2a. For a given colour value to be transformed: Set up a non-linear function that describes the colour transformation from given colour value to transformed colour value using given colour measurements;
2b. For a given colour value to be transformed:
Calculate the transformed colour value using said non-linear function.

The non-linear function may be a specific, local function for a given colour value to be transformed or a common, global function for a set or for all colour values to be transformed. By using the concept of an interpolating function, the colour transform can be fitted using irregularly distributed colour values.

Step 3 is a central point of the invention. Using the established non-linear colour transform, once, a large, over-sampled, possibly regularly distributed set of device dependent and device independent colour values are calculated. Steps 1 to 3 have the advantage that only a reduced number of measurements have to be taken while generating a large set of measurements. Steps 1 to 3 have the disadvantage that the non-linear colour transform is more complex and needs more computational time than a linear or less complex colour transform. This disadvantage is addressed in step 4.

The fourth step consists in establishing a colour transform from the dense set of regularly distributed colour values. Since the distribution of colour values is regular and its density is high, very simple colour transforms can be employed that exploit the regular structure of measurements and/or the high density of measurements.

The embodiment of the invention describes a solution for an image display device where the non-linear transform is based on thin plate splines and the simple transform on tetrahedral linear interpolation.

In this case, device dependent colour values are display input colour values and device independent values are display device output colours. The input colour values consists each of a triplet of R (red), G (green) and B (blue) components. The output values consists each of a triplet of X, Y and Z components.

The method described here allows establishing an RGB to XYZ colour transform as well as a XYZ to RGB colour transform. The example shown here is the establishment of an XYZ to RGB colour transform.

According to the first step, a reduced number of RGB and corresponding XYZ colour values are measured. First, a set of device dependent RGB colour values is chosen and fed into the display device. Then, the reproduced colours are measured by an optical instrument giving a set of corresponding device independent XYZ colour values. Since this procedure needs time (controlling of RGB values, measurement time, data processing time, eventually manual interactions), the number of colour values is limited. By this procedure a set of colour values $C_i^{RGB}, C_i^{XYZ} \forall 1 \leq i < I$ are measured with $C^{RGB} = (R,G,B)^T$ and $C^{XYZ} = (X,Y,Z)^T$.

According to the second step, a colour transform is established from the measured colour values. As an example, a transform based on thin plate splines interpolation is described. Thin plate splines is a physically based 3D interpolation scheme for arbitrarily spaced tabulated data. These splines are the generalization of the natural cubic splines in 1D. The splines volume represents a thin metal structure that is constrained not to move at the grid points. The idea is to build a function f whose graph passes through the colour values and minimizes a bending energy function.

The thin plate spline method offers a solution for the interpolation of an XYZ color value $C_{TEST}^{XYZ}$ that corresponds to a given RGB color value $C_{TEST}^{RGB}$.

Thin plate splines is a physically based 3D interpolation scheme for arbitrary spaced tabulated data ($R_i, G_i, B_i$, $F(R_i, G_i, B_i)$). The idea is to build a 3D function $XYZ = F(R,G,B)$ which minimizes a bending function. For a set of tabulated points $\{(R_i, G_i, B_i)\}_{i=1}^n$, the function to minimize is:

$$F(R,G,B) = \sum_{j=1}^n a_j E\left(\left\|(R - R_j, G - G_j, B - B_j)\right\|\right) + b_0 + b_1 R + b_2 G + b_3 B$$

Where $E(r) = r^2 \log(r^2)$ and $\|.\|$ indicates the length of a 3D vector. The coefficients $a_j$ and $b_j$ are determined by requiring the exact interpolation. This leads to:

$$w_i = \sum_{j=1}^n a_j E_{ij} + b_0 + b_1 R_i + b_2 G_i + b_3 B_i$$

For $1 \leq i < n$ where $E_{ij} = E(\|R_i - R_j, G_i - G_j, B_i - B_j\|)$. We can write the matrix representation of the previous equation:

$$\vec{w} = A\vec{a} + B\vec{b}$$

Where $A = \lfloor E_{ij} \rfloor$ is an **nxn** matrix and where **B** is and $4 \times l$ matrix whose rows are [1 $R_i$ $G_i$ $B_i$]. An additional implication is that:

$$B^T \vec{a} = \vec{0}$$

These two vector equations can be solved to obtain:

$$\vec{a} = A^{-1}(\vec{w} - B\vec{b}) \quad \text{and} \quad \vec{b} = \left(B^T A^{-1} B\right)^{-1} B^T A^{-1} \vec{w}$$

The set of tabulated points is the result of measures which are not completely accurate. In order improve the result of this interpolation we have to smooth the result (the interpolation is no more conservative). We can provide a smoothing term and use the following equation:

$$\vec{w} = (A + sI)\vec{a} + B\vec{b}$$

**EP 1 701 555 A1**

where $s>0$ is a smoothing parameter and $I$ is the $n\times n$ identity matrix.

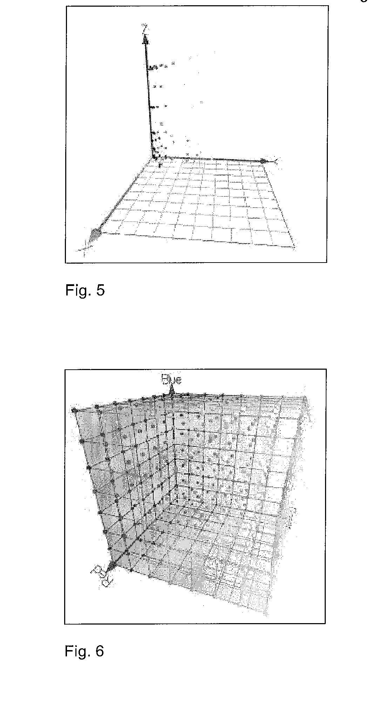

Fig. 4 shows a set of tabulated RGB colour values Fig. 5 shows a set of corresponding tabulated XYZ colour values.

According to step 3, the thin plate spline method is used to generate a regularly distributed, over-sampled set of input (Fig. 4) and output color values (Fig. 5).

Therefore, a set of input colors $C_j^{RGB}$ with

$$C_j^{RGB} = (R_j, G_j, B_j)^T; \; ; R_j = 256*(j\%3)/J; G_j = 256*(j\%2)/J; B_j = 256* j/J \text{ where "\%" means the modulo operation}$$

and $J >> I$. Then, output color values $C_j^{XYZ}$ are calculated from the input color values using the described thin splines plate method.

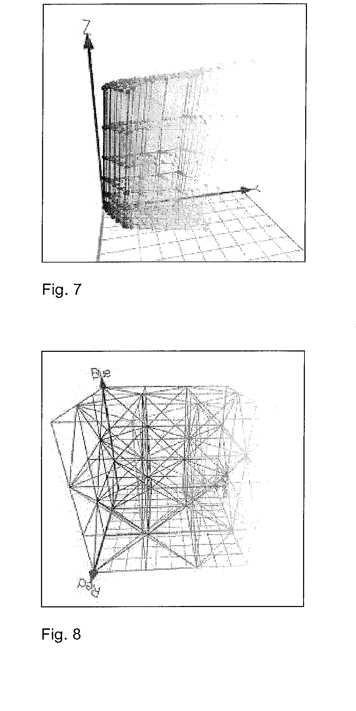

Fig. 6 displays over-sampled RGB colour values and Fig. 7 the resulting XYZ values corresponding to the over-sampled RGB values.

Finally, a colour transform is established from the input (Fig. 7) and output (Fig. 8) colour values $C_j^{RGB}$

$, C_j^{XYZ} \forall 0 \leq j < J$ . The color transform is based on a tetrahedral interpolation scheme as follows.

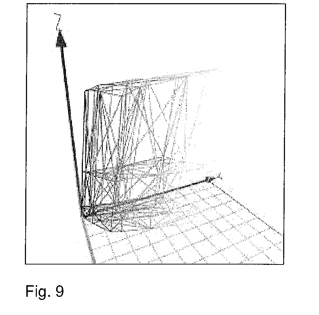

Fig. 8 shows the tetrahedral structure built from the over-sampled RGB colour values. Fig. 9 exhibits the transformation of the tetrahedral structure shown in Fig. 8.

For a given $XYZ_s$ value let us look for the tetrahedron including this value. Because the XYZ tetrahedral structure (Fig. 9) is the result of transformation of the RGB tetrahedral structure (Fig. 8) we can directly consider the corresponding RGB tetrahedron which includes the $RGB_s$ result.

If we consider this XYZ tetrahedron as vector basis we can find the coordinate of $XYZ_s$ in this vector basis and the equivalent $RGB_s$ value in the RGB tetrahedral structure will have the same coordinate in the corresponding RGB tetrahedron.

Considering $XYZ_0$, $XyZ_1$, $XYZ_2$, $XYZ_3$ (the tetrahedron vertices), $XYZ_s$ in the XYZ tetrahedral structure and the corresponding $RGB_0$, $RGB_1$, $RGB_2$, $RGB_3$, $RGB_s$ in the RGB tetrahedral structure. We can compute det:

$$\det = \begin{vmatrix} a & b & c \\ a' & b' & c' \\ a'' & b'' & c'' \end{vmatrix}$$

With

$$a_{XYZ} = X_1 - X_0, \quad a_{XYZ}' = Y_1 - Y_0, \quad a_{XYZ}'' = Z_1 - Z_0$$

$$b_{XYZ} = X_2 - X_0, \quad b_{XYZ}' = Y_2 - Y_0, \quad b_{XYZ}'' = Z_2 - Z_0$$

$$c_{XYZ} = X_3 - X_0, \quad c_{XYZ}' = Y_3 - Y_0, \quad c_{XYZ}'' = Z_3 - Z_0$$

$$d_{XYZ} = X_5 - X_0, \quad d_{XYZ}' = Y_5 - Y_0, \quad d_{XYZ}'' = Z_5 - Z_0$$

Then the coordinates of $XYZ_s$ in the tetrahedron defined by the points $XYZ_0$, $XYZ_1$, $XYZ_2$, $XYZ_3$ are:

7

$$u_s = \frac{\begin{vmatrix} d_{XYZ} & b_{XYZ} & c_{XYZ} \\ d_{XYZ}' & b_{XYZ}' & c_{XYZ}' \\ d_{XYZ}'' & b_{XYZ}'' & c_{XYZ}'' \end{vmatrix}}{\det},$$

$$v_s = \frac{\begin{vmatrix} a_{XYZ} & d_{XYZ} & c_{XYZ} \\ a_{XYZ}' & d_{XYZ}' & c_{XYZ}' \\ a_{XYZ}'' & d_{XYZ}'' & c_{XYZ}'' \end{vmatrix}}{\det}$$

and

$$w_s = \frac{\begin{vmatrix} a_{XYZ} & b_{XYZ} & d_{XYZ} \\ a_{XYZ}' & b_{XYZ}' & d_{XYZ}' \\ a_{XYZ}'' & b_{XYZ}'' & d_{XYZ}'' \end{vmatrix}}{\det}$$

And the coordinates of the final $RGB_s$ result are:

$$R_s = a_{RGB}u_s + b_{RGB}v_s + c_{RGB}w_s + R_0$$

$$G_s = a_{RGB}'u_s + b_{RGB}'v_s + c_{RGB}'w_s + G_0$$

$$B_s = a_{RGB}''u_s + b_{RGB}''v_s + c_{RGB}''w_s + B_0$$

With:

$$a_{RGB} = R_1 - R_0, \quad a_{RGB}' = G_1 - G_0, \quad a_{RGB}'' = B_1 - B_0$$

$$b_{RGB} = R_2 - R_0, \quad b_{RGB}' = G_2 - G_0, \quad b_{RGB}'' = B_2 - B_0$$

$$c_{RGB} = R_3 - R_0, \quad c_{RGB}' = G_3 - G_0, \quad c_{RGB}'' = B_3 - B_0$$

**Claims**

1. Apparatus for characterizing a colour device, wherein the apparatus comprises

    - input means for inputting a set of input colour values into the colour device,
    - measurement means for measuring a first set of output colour values are responsive to the input colour values,
    - determination means for determining a first transformation rule from the first set of input and output colour values for transforming input colour values into the output colour values,
    - calculation means for calculating additional input and output colour values based on the first transformation rule to generate a second set of input and output colour values,
    - means for determining a second transformation rule from the second set of input and output colour values for transforming the set of input colour values into the second set of output colour values.

2. Apparatus according to claim 1, **characterized in that,** the colour device is a reproduction device, that the input are memory means for storing a set of device dependent input colour values and **in that** the first set of output colour values are device independent colour values.

3. Apparatus according to claim 1, **characterized in that,** the colour device is a capturing device, that the input means device independent input colour values and **in that** the first set of output colour values are device dependent.

4. Apparatus according to claim 1, **characterized in that,** the determination means execute a thin plate spline interpolation scheme.

5. Apparatus according to claim 1, **characterized in that,** the calculation means calculate the additional output colour values according to a nearest neighbour, a tetrahedral, a distance-weighted, a sequential linear or a natural neighbour interpolation method.

6. Apparatus according to claim 1, **characterized in that,** the input colour values are located in a first colour space and that the output colour values are located in a second colour space.

7. Apparatus according to claim 6,**characterized in that** the second set of output colour values lie on a regular grid in the second colour space.

8. Apparatus according to claim 6, **characterized in that** the second set of input colour values lie on a regular grid in the first colour space.

9. Method for characterizing a colour device, wherein the method comprises the following steps :

    - providing the colour device with a set of input colour values,
    - measuring a first set of output colour values, wherein the output colour values are responsive to the input colour values,
    determining a first transformation rule from the first set of output colour values for transforming input colour values into the output colour values,
    - calculating additional input and output colour values based on the first transformation rule to generate a second set of input and output colour values,
    - determining a second transformation rule from the second set of input and output colour values for transforming input colour values into output colour values.

10. Method according to claim 9, **characterized in that,** the step of determining a first transformation rule includes executing a thin plate splines interpolation schemes .

11. Method according to claim 9, **characterized in that,** the step of calculating the additional output colour values involves a nearest neighbour, a tetrahedral, a distance-weighted, a sequential linear or a natural neighbour interpolation method.

Fig. 1

Fig. 2

Step 1                    Step 2                         Step 3

RGB, XYZ          ┌─────────────────┐      XYZ       ┌─────────────────┐
────────────────▶│  Establishment  │─────────────▶│                 │
                  │  of Transform 1 │               │   Oversampling  │
                  └─────────────────┘               └─────────────────┘
                                                              │
                                      Step 4        X'Y'Z'    │
                                                              ▼
                                               ┌─────────────────┐
                                 ◀─────────────│  Establishment  │
                                               │  of Transform 2 │
                                               └─────────────────┘

Fig. 3

Fig. 4

Fig. 5

Fig. 6

Fig. 7

Fig. 8

Fig. 9

**European Patent Office**

**EUROPEAN SEARCH REPORT**

Application Number

EP 05 30 0165

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 809 213 A (BHATTACHARJYA ET AL) 15 September 1998 (1998-09-15) * abstract; claim 1; figures 2a,3,4 * * column 3, line 28 - column 4, line 39 * * column 5, line 12 - line 16 * * column 6, line 5 - line 8 * * column 9, line 42 - column 11, line 17 * ----- | 1-3,5,6, 9,11 | H04N17/02 H04N1/60 |
| X | US 6 023 351 A (NEWMAN ET AL) 8 February 2000 (2000-02-08) * abstract; claim 1; figures 3-7 * * column 2, line 1 - line 36 * * column 5, line 25 - line 56 * * column 10, line 62 - column 11, line 7 * ----- | 1-3,5-9, 11 | |
| A | EP 0 676 892 A (XEROX CORPORATION) 11 October 1995 (1995-10-11) * abstract; claim 1 * ----- | 1-11 | |
| A | US 5 296 923 A (HUNG ET AL) 22 March 1994 (1994-03-22) * abstract * * column 3, line 43 - column 4, line 62 * ----- | 1-11 | TECHNICAL FIELDS SEARCHED (Int.Cl.7) H04N |

The present search report has been drawn up for all claims

| Place of search | Date of completion of the search | Examiner |
|---|---|---|
| The Hague | 10 August 2005 | Güvener, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 30 0165

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2005

| Patent document cited in search report | | Publication date | Patent family member(s) | | Publication date |
|---|---|---|---|---|---|
| US 5809213 | A | 15-09-1998 | JP | 10028231 A | 27-01-1998 |
| US 6023351 | A | 08-02-2000 | JP | 2000188697 A | 04-07-2000 |
| EP 0676892 | A | 11-10-1995 | US | 5471324 A | 28-11-1995 |
| | | | DE | 69515071 D1 | 23-03-2000 |
| | | | DE | 69515071 T2 | 13-07-2000 |
| | | | EP | 0676892 A2 | 11-10-1995 |
| | | | JP | 7307872 A | 21-11-1995 |
| US 5296923 | A | 22-03-1994 | JP | 3174604 B2 | 11-06-2001 |
| | | | JP | 6030251 A | 04-02-1994 |

EPO FORM P0459

For more details about this annex : see Official Journal of the European Patent Office, No. 12/82

**REFERENCES CITED IN THE DESCRIPTION**

**Non-patent literature cited in the description**

- **F. L BOOKSTEIN.** Principal Warps: Thin Plate Splines and the Decomposition of Deformations. *IEEE Transactions on Pattern Analysis and Machine Intelligence,* June 1989, vol. 11